# EUROPEAN PATENT APPLICATION

(11) **EP 1 643 237 A1**
(43) Date of publication of application: **05.04.2006**
(21) Application number: 05021304.0
(22) Date of filing: 29.09.2005
(51) Int. Cl.: G01N 21/55, G01N 21/13, G01N 21/05, G01N 21/27, G01N 33/543, G01N 35/02

(54) **Device and method for quantitatively measuring immobilised sample**

(30) Priority: 30.09.2004 JP 2004287615
(71) Applicant: FUJI PHOTO FILM CO., LTD., Minami-Ashigara-shi, Kanagawa (JP)
(72) Inventor: Ogura, Nobuhiko, Ashigarakami-gun Kanagawa (JP); Kimura, Toshihito, Ashigarakami-gun Kanagawa (JP); Hayashi, Katsumi, Ashigarakami-gun Kanagawa (JP)
(74) Representative: Klunker . Schmitt-Nilson . Hirsch

(57) **Abstract**

Evaluation of an amount of immobilized sample in a surface plasmon resonance (SPR) immunoassay is provided. To immobilize the sample, a sensor unit has a sensing surface. The sensor unit includes a transparent dielectric medium, and a metal film having the sensing surface. The metal film is connected with the dielectric medium for constituting a metal/dielectric interface. The sensing surface is adapted to sensing reaction of the sample. Then illuminating light reflected by the metal/dielectric interface is received with a photo detector such as a CCD upon applying the illuminating light to the metal/dielectric interface, to detect attenuation of the illuminating light and output a detection signal thereof. The evaluated amount of the sample immobilized on the sensing surface is evaluated according to the detection signal. Before immobilization, the sensor unit is tested for the photo detector to output an initial detection signal, which is considered for the evaluation.

## Description

### BACKGROUND OF THE INVENTION

### 1. Field of the Invention

The present invention relates to a device and method for quantitatively measuring immobilized sample. More particularly, the present invention relates to a device and method for quantitatively measuring immobilized sample, which is suitable in an assay of a type in utilizing attenuated total reflection, and which can quantitatively evaluate the immobilized sample in a manner free from causing delay in the assay as a main operation.

### 2. Description Related to the Prior Art

An assay apparatus in utilizing attenuated total reflection for assaying a sample is known in the field of the biosensor. U.S.P. No. 5,313,264 (corresponding to JP-A 4-501462) discloses a surface plasmon resonance (SPR) sensor as a typical example for this assay.

A thin film, or metal film, is formed on a transparent dielectric medium. One surface of the metal film is a sensing surface where reaction of a sample occurs. Another surface of the metal film is a metal/dielectric interface where light is applied by satisfying a condition of total reflection. The reaction is detected to assay the sample according to attenuation of the reflected light from the metal/dielectric interface.

In a metal, free electrons vibrate to generate the compressional wave called a plasma wave. Surface plasmon is a term to mean the compressional wave created on the surface of the metal and included in plasmon as quantized expression of the compressional wave. The surface plasmon travels along the surface of the metal. The surface plasmon resonance (SPR) assay apparatus is constructed to detect surface plasmon resonance created on the sensing surface which is a first surface of the metal film.

Light for detection is applied to a metal/dielectric interface of the metal film that is back to the sensing surface so that the total reflection condition is satisfied, namely at an angle of incidence equal to or more than a critical angle. In addition to the total reflection created on the metal/dielectric interface, a small component of the light passes through the metal film without reflection, and penetrates to the sensing surface. A wave of the penetrating component is called an evanescent wave. Surface plasmon resonance (SPR) is created when frequency of the evanescent wave coincides with that of the surface plasmon. In response to this, intensity of the reflected light attenuates remarkably. In the assay apparatus, the attenuation in the reflected light reflected by the metal/dielectric interface is detected, to recognize creation of the SPR on the sensing surface.

The angle of incidence, namely resonance angle of the light to generate the SPR depends on the refraction index of the transmission medium transmitting evanescent wave and surface plasmon. In other words, a change in the resonance angle to create SPR changes in response to a change in the refraction index of the transmission medium. The substance contacting the sensing surface is a transmission medium transmitting the evanescent wave and surface plasmon. If binding or dissociation between two molecules occurs on the sensing surface, the resonance angle changes because of a change in the refraction index of the transmission medium. In the SPR system, the change in the refraction index is detected, to measure interaction of molecules.

The assay apparatus can be used for various kinds of studies in a biochemical field or the like, for example to study interaction of protein, DNA and various biomaterials, and to select candidate drugs by screening. Also, the technique is useful in the fields of the clinical medicine, food industries and the like. It is possible to use one of two substances as a ligand and another of them as an analyte if those have bioaffinity. For the purpose of screening, protein as biomaterial is used as ligand. Candidate drugs are discretely used as analyte, and contacted with the ligand on the sensing surface, to study interaction.

JP-A 6-167443 and U.S.P. No. 5,822,073 disclose discloses an SPR assay apparatus in which an optical system of Kretschmann configuration is used for incidence of light to the metal film. According to the Kretschmann configuration, the surface of the metal film as metal/dielectric interface is fitted on a prism, which condenses light and directs the light to the metal/dielectric interface in a manner conditioned for total reflection. A sample or ligand is immobilized on the sensing surface. A flow channel is formed to have the sensing surface inside, and causes analyte fluid to flow. The analyte fluid is introduced in the flow channel to flow, and is caused to contact the ligand. Interaction between the analyte fluid and the ligand is assayed by detecting surface plasmon resonance created during the reaction.

In JP-A 6-167443, an assay stage is formed on an assay apparatus casing, and has a prism and a flow channel. A chip type of sensor unit is set on the assay stage for assay. The sensor unit is constituted by a transparent glass substrate as dielectric medium, and a metal film overlaid on the glass substrate. The sensor unit is set on the assay apparatus casing in a removable manner, and oriented so as to direct a flow channel of the assay apparatus casing to a sensing surface, and to position the prism on the metal/dielectric interface. Prior to the assay, ligand is immobilized on the metal film of the sensor unit. JP-A 6-167443 discloses an example of assay apparatus in which the immobilization of the ligand is made while the sensor unit is set on the assay stage.

For an immobilized amount of the ligand on a sensing surface, there occur only small differences basically if the same specific method is used. A measured value of the immobilized amount may be equal to a theoretical value. However, the immobilized amount of the ligand is measured or evaluated for a practical use typically at the time of dispatch or maintenance of the assay apparatus. This is to check normality of the assay apparatus in operation for a normal state of immobilization, and also to obtain high precision in assay and analysis of the interaction between analyte and the ligand.

To evaluate the immobilized amount of the ligand, the sensor unit is set on the assay stage in the same manner as the assay of interaction between analyte and the ligand. After the ligand is immobilized, an SPR output of the sensor unit is obtained and evaluated for estimation.

A problem in the immobilization is in that time required from the introduction of the ligand until completion of the immobilization is as long as one (1) hour or so. This is remarkably longer than the measuring step for the assay which can take only a small number of minutes. If the assay stage is used for both of the immobilization and the measuring step for the assay, the assay stage must be occupied for the immobilization during the assay. Other sensor units cannot be set on the assay stage. This causes a problem of delay in the operation on the assay stage.

### SUMMARY OF THE INVENTION

In view of the foregoing problems, an object of the present invention is to provide a device and method for quantitatively measuring immobilized sample, which is suitable in an assay of a type in utilizing attenuated total reflection, and which can quantitatively evaluate the immobilized sample in a manner free from causing delay in the assay as a main operation.

In order to achieve the above and other objects and advantages of this invention, an immobilized sample measuring device includes an immobilizing stage for immobilization of a sample on a sensing surface of at least one sensor unit, wherein the sensor unit includes a transparent dielectric medium, and a thin film, having a first surface and the sensing surface back to the first surface, the first surface being connected with the dielectric medium for constituting a thin film/dielectric interface, the sensing surface being adapted to assay of reaction of the sample immobilized thereon. A signal detecting stage is loaded with the sensor unit after the sample immobilization in the immobilizing stage, has a photo detector for receiving illuminating light reflected by the thin film/dielectric interface upon applying the illuminating light to the thin film/dielectric interface in an orientation conditioned for total reflection, to detect attenuation of the illuminating light and output a detection signal thereof. An arithmetic processor evaluates an amount of the sample immobilized on the sensing surface according to the detection signal.

Preferably, the sample is ligand, and the sensing surface assays interaction between analyte and the ligand.

Preferably, the at least one sensor unit is plural sensor units. Furthermore, a sensor holder contains the plural sensor units, the sensor holder being adapted to transfer of the plural sensor units between the immobilizing stage and the signal detecting stage.

Preferably, before the sample immobilization, the sensor unit is set on the signal detecting stage for the photo detector to output an initial detection signal. The arithmetic processor evaluates the immobilized amount according to comparison between the initial detection signal and the detection signal.

Preferably, the sensing surface includes an assay region for immobilizing reaction of the sample, and a reference region inactive with respect to immobilizing the sample. The photo detector outputs the detection signal upon photo reception from the thin film/dielectric interface in the assay region, and outputs a reference signal upon photo reception from the thin film/dielectric interface in the reference region. The arithmetic processor evaluates the immobilized amount according to the detection signal and the reference signal.

Preferably, the photo detector obtains a position difference between a first light receiving position where the illuminating light is received on a photo detection surface upon reflection from the assay region at the thin film/dielectric interface, and a second light receiving position where the illuminating light is received on the photo detection surface upon reflection from the reference region at the thin film/dielectric interface. The arithmetic processor corrects the immobilized amount according to the position difference.

In one preferred embodiment, the sensing surface includes an assay region for immobilizing reaction of the sample, and a reference region inactive with respect to immobilizing the sample. Before the sample immobilization, the sensor unit is set on the signal detecting stage, and the photo detector outputs an initial detection signal upon photo reception from the thin film/dielectric interface in the assay region, and outputs an initial reference signal upon photo reception from the thin film/dielectric interface in the reference region. After the sample immobilization, the photo detector outputs the detection signal upon photo reception from the thin film/dielectric interface in the assay region, and outputs a reference signal upon photo reception from the thin film/dielectric interface in the reference region. The arithmetic processor evaluates the immobilized amount according to the initial detection signal, the initial reference signal, the detection signal and the reference signal.

Furthermore, an alarm unit, driven if the evaluated immobilized amount is equal to or less than a prescribed level, for generating an alarm signal.

Also, there is a first casing having the immobilizing stage. A second casing has the signal detecting stage.

In another preferred embodiment, one casing has the immobilizing stage and the signal detecting stage.

Preferably, the sensor unit includes a flow channel block, provided with the dielectric medium secured thereto, and having a flow channel, disposed to receive the sensing surface, to cause the sample to flow to the sensing surface.

Preferably, the sensor unit includes plural sensor cells each of which is constituted by the sensing surface and the flow channel.

Preferably, the thin film is a metal film, and generates surface plasmon resonance on the sensing surface upon incidence of the illuminating light.

Also, an immobilized sample measuring method includes an immobilizing step of immobilizing a sample on a sensing surface of at least one sensor unit, wherein the sensor unit includes a transparent dielectric medium, and a thin film, having a first surface and the sensing surface back to the first surface, the first surface being connected with the dielectric medium for constituting a thin film/dielectric interface, the sensing surface being adapted to assay of reaction of the sample immobilized thereon. There is a signal detecting step of receiving illuminating light reflected by the thin film/dielectric interface with a photo detector upon applying the illuminating light to the thin film/dielectric interface in an orientation conditioned for total reflection, to detect attenuation of the illuminating light and output a detection signal thereof. There is an arithmetic processing step of evaluating an amount of the sample immobilized on the sensing surface according to the detection signal.

Preferably, in the immobilizing step, the sensor unit is set on an immobilizing stage, and in the signal detecting step, the sensor unit with the sample immobilized is set on a signal detecting stage that is different from the immobilizing stage.

Consequently, it is possible quantitatively to evaluate the immobilized sample in a manner free from causing delay in the assay as a main operation, because the signal detecting stage for evaluation is additional to the immobilizing stage.

### BRIEF DESCRIPTION OF THE DRAWINGS

The above objects and advantages of the present invention will become more apparent from the following detailed description when read in connection with the accompanying drawings, in which:
Fig. 1A is a section, partially broken, illustrating a sample immobilizing step included in an assay method of a surface plasmon resonance biosensor;
Fig. 1B is a section, partially broken, illustrating an assay step included in the assay method;

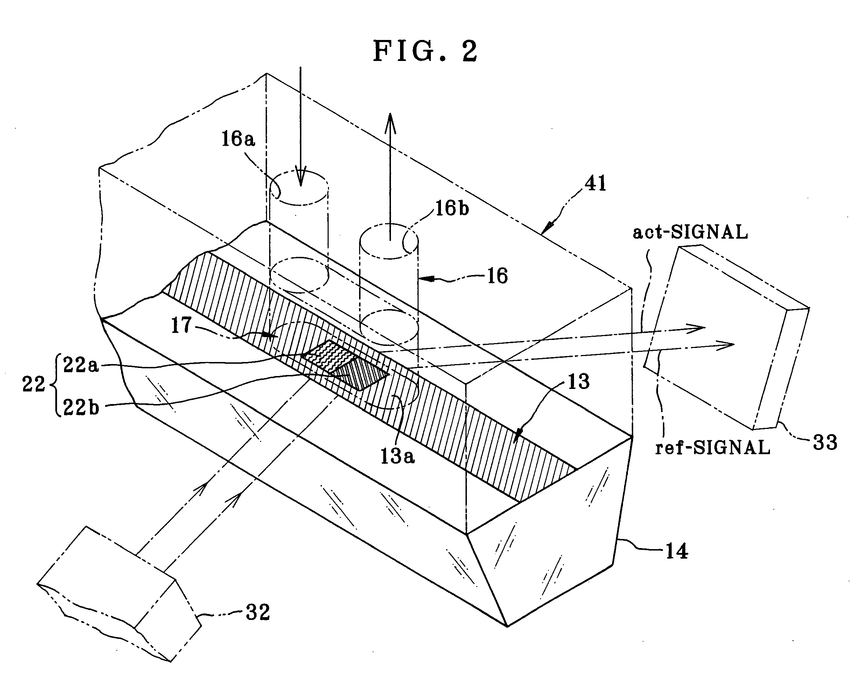

Fig. 2 is a perspective view illustrating an act-region and ref-region on a linker film;
Fig. 3 is an exploded perspective view illustrating a sensor unit;
Fig. 4 is a perspective view, partially broken, illustrating a sample immobilizing device;
Fig. 5 is a perspective view, illustrating an assay apparatus;
Fig. 6 is a block diagram schematically illustrating circuitry in a data analyzer;
Fig. 7 is a flow chart illustrating estimation of the immobilized sample;
Fig. 8 is a flow chart illustrating evaluation of the immobilized sample by utilizing dual channel signals;
Fig. 9 is a flow chart illustrating evaluation of the immobilized sample in consideration of a position difference;
Fig. 10 is a flow chart illustrating generation of an alarm signal for a situation of too low an evaluated level.

### DETAILED DESCRIPTION OF THE PREFERRED

### EMBODIMENT(S) OF THE PRESENT INVENTION

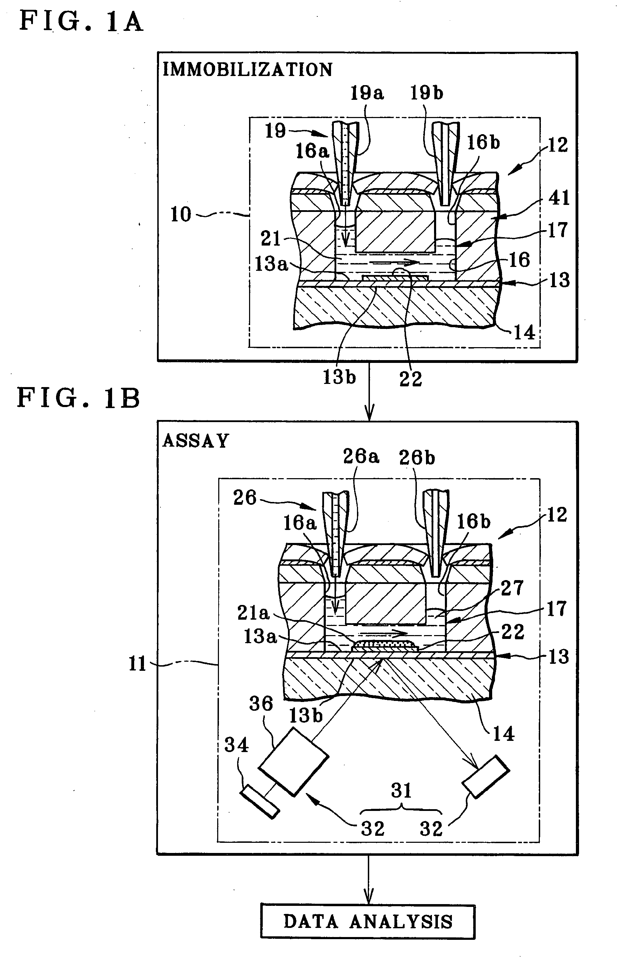

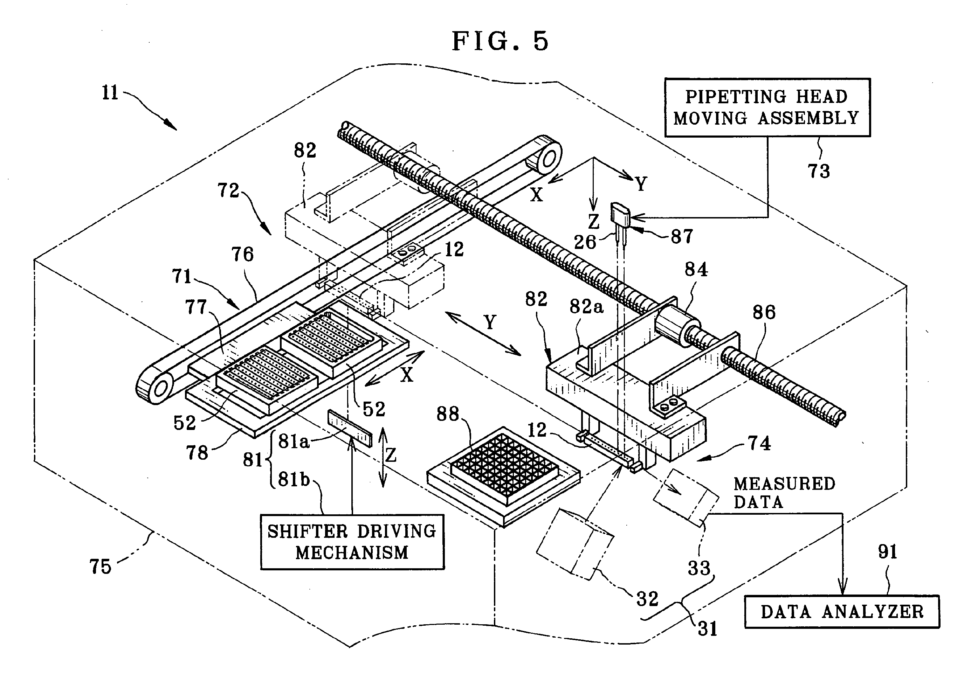

In Figs. 1A and 1B, a system for measuring or assay according to SPR (surface plasmon resonance) is illustrated. A sequence of the assay system is constituted by three processes which are a sample immobilizing process, assay process and data analyzing process. The assay system includes a sample immobilizing device 10, an assay apparatus 11, and a data analyzer 91, which is illustrated in Fig. 5.

A surface plasmon resonance (SPR) biosensor is used as a sensor unit 12 for assay. The sensor unit 12 includes a metal film 13, a prism 14 and a flow channel block 41. A first surface of the metal film 13 is a sensing surface 13a where surface plasmon resonance is created. A second surface of the metal film 13 is a thin film/dielectric interface or light entrance surface 13b where the prism 14 is fitted. The flow channel block 41 has a flow channel 16, which extends along the sensing surface 13a, and causes ligand and analyte as fluids to flow.

An example of material for the metal film 13 is gold (Au). A thickness of the metal film 13 is 50 nm. The thickness can be changed for the suitability in view of the material of the metal film 13, a wavelength of light to be applied, and the like. The prism 14 is a transparent dielectric medium or block, overlaid with the metal film 13, and also is an optical element for condensing light toward the thin film/dielectric interface 13b for satisfying the condition of the total reflection. The flow channel 16 is a U-shaped conduit, and has an entrance end opening 16a and an exit end opening 16b. A diameter of the flow channel 16 is approximately 1 mm. An interval between the entrance end opening 16a and the exit end opening 16b is approximately 10 mm.

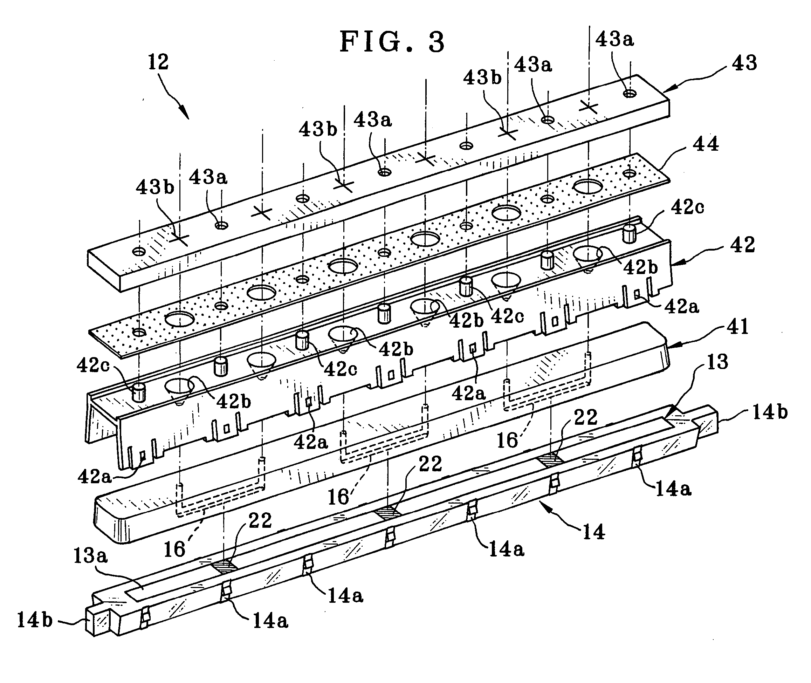

A lower side of the flow channel 16 is open initially, but closed in a firmly enclosed manner by covering of the sensing surface 13a. Sensor cells 17 are constituted by combinations of the flow channel 16 and the sensing surface 13a. The sensor unit 12 includes a plurality of the sensor cells 17. See Fig. 3. This will be described later in detail.

The immobilizing process is a binding step of ligand on the sensing surface 13a. At first, the sensor unit 12 is set in the sample immobilizing device 10. A pipette couple 19 is included in the sample immobilizing device 10, and has dispensing and removing pipettes 19a and 19b. The pipette 19a is set at the entrance end opening 16a. The pipette 19b is set at the exit end opening 16b. The pipette 19a introduces liquid to the flow channel 16. The pipette 19b sucks and removes liquid from the flow channel 16. The introduction with the pipette 19a is at the same time as the removal with the pipette 19b. Ligand solution or ligand fluid 21, as a fluid which contains ligand or biomaterial and fluid medium, is introduced through the entrance end opening 16a by the pipette couple 19.

A linker film 22 is overlaid on a middle portion of the sensing surface 13a for binding with the ligand. In the manufacturing process of the sensor unit 12, the linker film 22 is formed. As the linker film 22 is a basis for immobilizing the ligand, a material for the linker film 22 is selectively determined.

Pre-treatment before immobilization with the ligand fluid 21 is wetting of the linker film 22 by use of liquid buffer, and activation of the linker film 22 for the purpose of facilitating binding of the ligand to the linker film 22. An example of a method is the amine coupling method. An example of material for the linker film 22 is carboxy methyl dextran, to bind an amino group contained in the ligand with the dextran directly by a covalent bond. An example of liquid for the activation is mixture of N'-(3-dimethylaminopropyl) carbodiimide hydrochloride (EDC) and N-hydroxy imide succinate (NHS). After the activation, liquid buffer for immobilization is introduced to wash and clean the flow channel 16.

Various liquids are available for use as the liquid buffer for immobilization, and solvent or diluent for the ligand fluid 21. Examples of the liquids include buffer liquids, or physiological saline water and other aqueous solutions of physiological salts, and pure water. It is possible according to a type of the ligand to determine suitably solution types and pH values of the solutions, and types of substances to be mixed, and their density. If a biomaterial is used as a ligand, physiological saline water is used of which pH value is kept neutralized. In the amine coupling method described above, the linker film 22 is electrified negatively because of the carboxy methyl dextran. In consideration of this, it is possible to use phosphate buffered saline (PBS) solution having strong operation of buffer and containing phosphate salt at high density which is not physiological, because protein can be electrified positively for the purpose of facilitating binding with the linker film 22.

After the activation and washing, the ligand fluid 21 is introduced to the sensor cells 17 for a ligand immobilizing process. Ligand or sample 21a such as biomaterial diffused in the ligand fluid 21, in introducing the ligand fluid 21, gradually comes near to and binds with the linker film 22. This is immobilization of the ligand 21a on the sensing surface 13a. It is general that a step of the immobilization requires approximately one (1) hour, during which the sensor unit 12 is preserved in an environment conditioned suitably, for example at a conditioned temperature. In the course of the immobilization, the ligand fluid 21 in the flow channel 16 may be left to stand in a stationary state. However, the ligand fluid 21 can be preferably stirred or turbulently flowed for ensured fluidity in the flow channel 16. The stirring or turbulent flow can promote binding of the ligand 21a with the linker film 22, to raise an immobilized amount of the ligand 21a.

When the immobilization of the ligand 21a on the sensing surface 13a is completed, then the ligand fluid 21 is removed from the flow channel 16. The pipette 19b discharges the ligand fluid 21 by suction. After this, the sensing surface 13a is washed by feeding washing liquid into the flow channel 16. A blocking step, if required, is added after the washing. A blocking liquid is introduced into the flow channel 16, to render inactive the reaction group remaining without binding with the ligand. A preferable example of the blocking liquid is ethanol amine hydrochloride. After the blocking, the flow channel 16 is washed again. Then evaporation retardant is introduced to the flow channel 16, which will be described in detail later. The sensor unit 12 remains preserved until the assay with the sensing surface 13a humid on the evaporation retardant.

For the assay process, the sensor unit 12 is set in the assay apparatus 11. A pipette couple 26 is disposed in the assay apparatus 11 in the same manner as the pipette couple 19 in the sample immobilizing device 10. The pipette couple 26 introduces liquid of several types into the flow channel 16 through the entrance end opening 16a. At first, liquid buffer for assay is introduced into the flow channel 16. After this, analyte solution or analyte fluid 27 as a fluid which contains analyte and fluid medium, is introduced into the flow channel 16. Again, the liquid buffer is introduced after the analyte fluid 27. Note that the flow channel 16 may be cleaned or washed before initially introducing the liquid buffer. Reading of data starts upon initially introducing the liquid buffer in order to detect a reference level of a signal. The reading is continued until the introduction of the liquid buffer at the second time after entry of the analyte fluid 27. It is possible not only to detect the reference level but to assay reaction or binding between the analyte and the ligand, and to measure a signal until dissociation between the analyte and ligand in response to introduction of the liquid buffer.

Various liquids are available for use as the liquid buffer for assay, and solvent or diluent for the analyte fluid 27. Examples of the liquids include buffer liquids, or physiological saline water and other aqueous solutions of physiological salts, and pure water. It is possible according to a type of a ligand to determine suitably solution types and pH values of the solutions, and types of substances to be mixed, and their density. To facilitate dissolving of the analyte, dimethyl sulfo-oxide (DMSO) can be added to the physiological saline water. The use of the DMSO is reflected to a level of an output signal. The buffer for assay is used for detecting the reference level of the signal, as described above. If DMSO is contained in the solvent for the analyte, it is preferable to use buffer for assay at a DMSO density approximately equal to that of the solvent in the analyte.

In general, the analyte fluid 27 may be kept preserved for a long time, for example one year. It is likely that a difference occurs between an initial level and a current level of the DMSO density owing to a change with time. If assay with high precision is required, such a difference in the density is estimated according to the ref-signal level upon introducing the analyte fluid 27, so that measured data can be compensated for by DMSO density compensation.

A reference signal (ref-signal) is an output obtained by measuring a reference region disposed on the sensing surface and having no ligand being immobilized. The reference signal is used for comparison and reference with a measured signal (act-signal) of an assay region on which the ligand is immobilized for reaction on the analyte. For the assay, both of the measured signal and reference signal are detected and evaluated. For example, a finite difference between those is calculated in the data analysis, and used as measured data for biochemical analysis. It is possible to cancel electric noise caused by external irregularities, such as individual specificity of sensor cells, temperature changes of the liquid, and the like. A signal with a high S/N ratio can be obtained.

It is possible before introduction of the analyte fluid 27 to obtain correction data for correction the DMSO density. To be precise, a plurality of measuring buffers difference in the DMSO density are introduced into the sensor cells 17. There occur changes in levels of the ref-signal and the act-signal according to changes in the DMSO density. The changes in the levels are evaluated so that the correction data can be obtained according thereto.

An optical measuring unit or optical assay unit 31 is disposed in the assay apparatus 11. An illuminator 32 and a photo detector 33 are included in the optical assay unit 31. The reaction between the ligand and analyte can be recognized as a change of a resonance angle, which is an angle of incidence of light received by the thin film/dielectric interface 13b. To this end, the illuminator 32 is caused to apply light to the thin film/dielectric interface 13b at various values of angles of incidence satisfying a condition of the total reflection. The illuminator 32 includes a light source device 34 and an illuminating optical system 36, which includes a condensing lens, a diffusing plate and a polarizer. A position and angle of the installation of those elements are so determined that an angle of incidence of the light satisfies the condition of the above total reflection.

Examples of the light source device 34 include a light emitting diode (LED), laser diode (LD), super luminescent diode (SLD), and other light emitting element. A single element is used as the light source device 34 as a point light source. Also, a plurality of elements as the light source device 34 may be arranged as a surface light source. The diffusing plate diffuses light from the light source device 34, and suppresses onset of irregularity in the light amount. The polarizer allows only p-polarized light to pass, the p-polarized light creating the surface plasmon resonance. Note that no polarizer is required if directions of rays emitted by the light source device 34, for example an LD, are kept equal. However, a diffusing plate may be combined with the light source device 34 of a type of which directions of emitted rays are kept equal. Directions of rays in polarization are changed unequal by the passage through the diffusing plate. For this structure, the polarizer can be utilized to set equal the directions of the rays. The light obtained after the diffusion and polarization is condensed by a condensing lens, and directed to the prism 14. It is possible to travel rays with various angles of incidence toward the thin film/dielectric interface 13b without irregularity in the intensity.

The photo detector 33 receives light reflected by the thin film/dielectric interface 13b, and detects intensity of the light. Rays of light are incident upon the interface 13b at various angles. It follows that light is reflected by the interface 13b at various angles of reflection according to the angles of the incidence. The photo detector 33 receives light at various angles. If there is a change in the resonance angle according to interaction of the analyte and ligand, a reflection angle at which light is attenuated is changed, too. When the analyte is caused to flow on the sensing surface 13a, the resonance angle changes according to interaction between the analyte and the ligand. The reflection angle in the attenuation also changes.

An example of the photo detector 33 is a CCD area sensor, which retrieves such a change in the reflection angle as a gradual change in the attenuating position of the reflected light by the a photo receptor surface. The photo detector 33 generates measured data which is information of reaction state, and sends the measured data to the data analyzer 91. For example, the refraction index on the sensing surface 13a is different between positions before and after the contact of the analyte with the ligand. There is a difference in the resonance angle to generate surface plasmon resonance, or namely a difference in the attenuating position of the reflected illuminating light. When reaction starts by contact of the analyte with the ligand, the resonance angle of the reflected illuminating light starts changing, to start moving the attenuating position of the reflected illuminating light on the photo receptor surface. A surface plasmon resonance signal representing the interaction is obtained, and output and sent to the data analyzer 91. The data analyzer 91, in the data analyzing process, analyzes the measured data from the assay apparatus 11, to retrieve a characteristic and other information of the analyte.

Note that in Fig. 5, the illuminator 32 and the photo detector 33 in the optical assay unit 31 are positioned so that a direction of light projected and reflected between those intersects horizontally with a flow of the flow channel 16, which is unlike that structure depicted in Fig. 1B. The state of Fig. 1B is simplified for the convenience. However, in the invention the illuminator 32 and the photo detector 33 may be positioned according to in Fig. 1B so that a direction of light projected and reflected between those is horizontally aligned with the flow of the flow channel 16 between the pipettes.

There are an assay region 22a (act) and a reference region 22b (ref) formed in the linker film 22. The assay region 22a has immobilization of a ligand, and is a region for reaction between the ligand and analyte. The reference region 22b does not have immobilization of a ligand, and is used for outputting a reference signal for comparison with a signal retrieved from the assay region 22a. Note that the reference region 22b is formed in the course of film production of the linker film 22. An example of a process of the forming has steps of surface processing of the linker film 22 at first, and then deactivating the reaction groups in approximately a half of an entire area of the linker film 22 for binding with ligand. Thus, a half of the linker film 22 becomes the assay region 22a. A remaining half of the linker film 22 becomes the reference region 22b.

An output of the photo detector 33 by measuring the assay region 22a is an act-signal. An output of the photo detector 33 by measuring the reference region 22b is a ref-signal. The act-signal and ref-signal are measured simultaneously in the course of a period starting upon detection of a reference level, and then reaction of binding, and ending upon dissociation. Data analysis is effected by obtaining a difference or ratio of the act-signal and ref-signal. For example, the data analyzer 91 obtains data of a finite difference between the act-signal and ref-signal, and analyzes various items according to the finite difference. This makes it possible to cancel electric noise caused by external irregularities, such as individual specificity of sensor units or sensor cells, mechanical changes of the assay apparatus, temperature changes of the liquid, and the like. A signal with a high S/N ratio can be obtained.

The illuminator 32 and the photo detector 33 are so constructed as to measure the act-signal and the ref-signal in two lines. For example, one light-emitting element and a reflection mirror are used in the illuminator 32. Light is split into plural light components which are directed to the assay and reference regions 22a and 22b. The photo detector 33 receives respectively the light components, being constituted by a plurality of arrays of photo diodes associated with respectively the signal channels.

If a CCD area sensor is used as the photo detector 33, reflected light of the dual channels received at the same time can be recognized as an act-signal and ref-signal by the image processing. However, such a method according to the image processing might be too difficult. Alternatively, signals of the signal channels can be received by differentiating the time sequence for a very small period of time of the incidence between the assay and reference regions 22a and 22b. An example of differentiating the time sequence is a use of a disk disposed on a light path and having two holes positioned at 180 degrees of a rotational angle. The disk is rotated to shift the time sequence between the signal channels. The holes are disposed at a difference of the radius from the rotational center in association with the interval between the assay and reference regions 22a and 22b. When a first one of the holes enters the light path, illuminating light travels to the assay region 22a. When a second one of the holes enters the light path, the light travels to the reference region 22b. Note that U.S. Pub. No. 2003/113,231 (corresponding to JP-A 2001-337036) discloses the use of the assay and reference regions 22a and 22b.

In Fig. 3, the sensor unit 12 is illustrated structurally. The sensor unit 12 includes the flow channel block 41, the prism 14, a retaining block 42, and a lid 43. The flow channel block 41 has the at least one flow channel 16 formed through the same. The prism 14 has the metal film 13 overlaid on its upper surface. The retaining block 42 supports the flow channel block 41 by fitting its lower surface on an upper surface of the prism 14. The lid 43 is disposed higher than the retaining block 42.

The flow channel 16, for example three (3) channels, are formed in the flow channel block 41. The flow channel block 41 has a long shape, in which the flow channels 16 are arranged in a direction of a block length. The flow channels 16 constitute the sensor cells 17 together with the metal film 13 in connection with its lower surface. See Figs. 1A and 1B. The flow channel block 41 is formed from elastic material for the purpose of ensuring tightness in contact with the metal film 13. Examples of elastic materials include rubber, polydimethylsilicone (PDMS), and the like. When a lower surface of the flow channel block 41 is pressed on an upper surface of the prism 14, the flow channel block 41 is elastically deformed, to remove a space between its surface and the metal film 13. Open lower portions of the flow channels 16 are closed water-tightly by the upper surface of the prism 14. Note that the number of the flow channels 16 may not be three, but can be one or two, or four or more.

The metal film 13 is deposited on the prism 14 by vapor deposition. The metal film 13 is formed in plural regions of long quadrilaterals opposed to the flow channel 16 formed in the flow channel block 41. Also, the linker film 22 is overlaid on an upper face or the sensing surface 13a of the metal film 13 and in regions associated with the flow channels 16. Retaining claws 14a are formed to project from the prism 14 at its sides as viewed longitudinally. Retaining claws 42a of the retaining block 42 are engageable with the retaining claws 14a. The flow channel block 41 is sandwiched between the retaining block 42 and the prism 14. A lower surface of the flow channel block 41 is kept fitted on the prism 14. A composite part as biosensor is obtained by unifying the flow channel block 41, the metal film 13 and the prism 14.

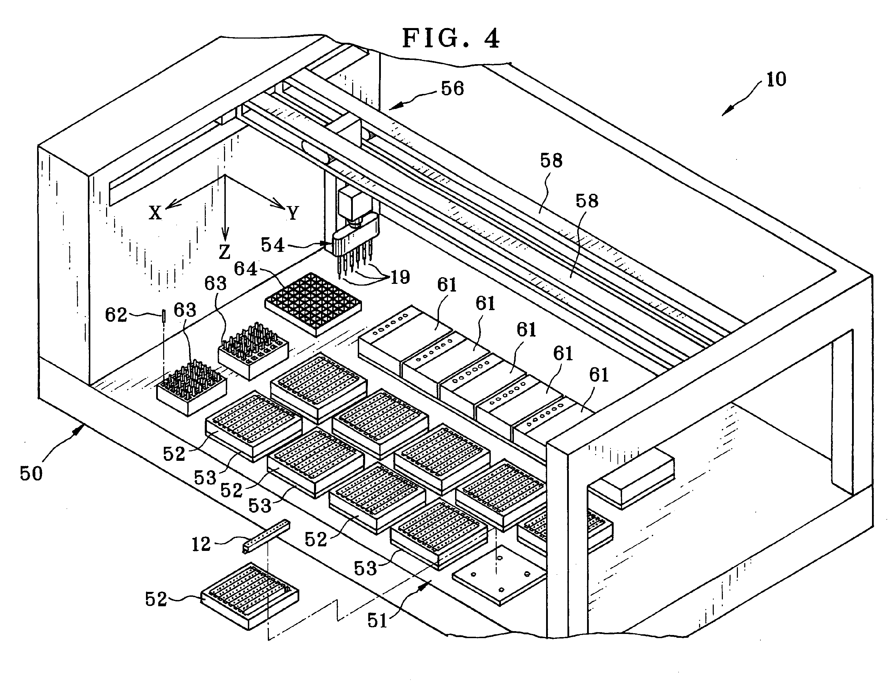

Retaining projections 14b protrude from ends of the prism 14 as viewed in its longitudinal direction. A sensor holder 52 of Fig. 4 contains a plurality of sensor units 12. As will be described later, the immobilization on the sensor unit 12 is effected while the sensor unit 12 is contained in the sensor holder 52. The retaining projections 14b are formed for positioning the sensor unit 12 in a contained state in the sensor holder 52 by engagement with the sensor holder 52.

A receiving orifice 42b is formed in the retaining block 42, and positioned at each of the entrance end opening 16a and the exit end opening 16b of the flow channel 16, for entry of an end of each of dispensing and removing pipettes 26a and 26b and the dispensing and removing pipettes 19a and 19b. The receiving orifice 42b has a funnel shape for introducing liquid ejected by the pipettes toward the entrance end opening 16a. When the retaining block 42 is retained on the prism 14 with the flow channel block 41, a lower side of the receiving orifice 42b is connected with the entrance end opening 16a and the exit end opening 16b, for communication of the receiving orifice 42b with the flow channel 16.

Cylindrically shaped bosses 42c are formed to project beside the receiving orifice 42b. Positioning holes 43a are formed in the lid 43. The bosses 42c are fitted in the positioning holes 43a, to position the lid 43 firmly. Double-sided adhesive tape 44 attaches the lid 43 to an upper surface of the retaining block 42. Note that suitable holes are formed in the double-sided adhesive tape 44 and associated with the receiving orifice 42b and the bosses 42c.

The lid 43 covers the receiving orifice 42b communicating to the flow channel 16, and prevents evaporation of liquid in the flow channel 16. The lid 43 is formed from rubber, elastomer, resin or other elastic material. A cross shaped slit 43b is formed in the lid 43 and positioned respectively at the receiving orifice 42b. The lid 43 is required to cover the receiving orifice 42b in order to prevent liquid in the flow channel 16 from evaporation. However, no pipette can enter the receiving orifice 42b if covering of the lid 43 is complete. So the cross shaped slit 43b is formed to enable insertion of pipettes, and to close the receiving orifice 42b while no pipette is inserted. If a pipette is forcibly pressed into the cross shaped slit 43b, its edges are elastically deformed, to allow receipt of the pipette by becoming open. See Figs. 1A and 1B. When the pipette is externally pulled out, the cross shaped slit 43b elastically closes the receiving orifice 42b again by returning to its initial state.

In Fig. 4, a casing base 50 is included in the sample immobilizing device 10. An immobilizing stage 51 of the sample immobilizing device 10 is formed on the casing base 50 so as to place the sensor unit 12 therein. While the immobilizing stage 51 contains the sensor unit 12, the entirety of the immobilizing process is effected. Thus, the immobilizing device constitutes the immobilizing stage 51 for the sensor unit 12.

The sensor unit 12 is set in the sample immobilizing device 10 in a state contained in the sensor holder 52. For example, eight (8) of the sensor units 12 can be contained in the sensor holder 52. The retaining projections 14b of the sensor unit 12 are engaged with engageable portions of the sensor holder 52, which positions the sensor unit 12. Also, a lower side of the sensor holder 52 is open except for a region for supporting ends of the sensor unit 12. If removal of the sensor unit 12 from the sensor holder 52 is desired in the assay process, the open side of the sensor holder 52 is accessed, as will be described later. A shifting element 81a of Fig. 5 is inserted in the open side, to push up the sensor unit 12.

The immobilizing stage 51 is so large that ten of the sensor holders 52 can be installed at one time there. Plural pallets 53 are disposed in the immobilizing stage 51. Positioning bosses are formed on each of the pallets 53 for positioning the sensor holder 52.

A pipetting head group 54 with a liquid transfer mechanism is disposed in the sample immobilizing device 10, and includes pipetting heads of the three pipette couples 19 for combination with pipette tips. The pipetting head group 54 accesses the sensor unit 12 in a conveyor belt 55 to introduce and discharge liquid. As the pipette couples 19 are three pairs in the pipetting head group 54, three of the sensor cells 17 can be accessed in the sensor unit 12 for the introduction or discharge of liquid at the same time. A controller in the sample immobilizing device 10 controls the pipetting head group 54 for operation of the pipette couples 19 regarding various items, for example an amount of liquid in dispensation or suction, and a time sequence of the dispensation or suction.

A pipetting head moving assembly 56 on the casing base 50 moves the pipetting head group 54 in the three directions of X, Y and Z. An example of the pipetting head moving assembly 56 is constituted by elements including a transporting belt, pulley, carriage, motor and other well-known devices. The pipetting head moving assembly 56 includes a vertical shifter, a first horizontal shifter and a second horizontal shifter. The vertical shifter moves the pipetting head group 54 up and down. The first horizontal shifter includes guide rails 58, which keep the pipetting head group 54 movable in the direction Y together with the vertical shifter. The second horizontal shifter supports the guide rails 58 at two ends, and moves the pipetting head group 54 in the direction X together with the guide rails 58. The controller controls the pipetting head moving assembly 56, and controls the vertical position and horizontal position of the pipetting head group 54 by driving the pipetting head moving assembly 56.

Plural liquid reservoirs 61 are disposed on the casing base 50 for storing various liquids to be supplied to the flow channel 16, the liquids including ligand fluid, washing liquid, liquid buffer for immobilization, evaporation retardant or evaporation inhibitor, activating liquid, blocking liquid and the like. The number of the liquid reservoirs 61 is determined according to the number of the types of liquid in use. Six insertion orifices are formed in the liquid reservoirs 61. The number and interval of the orifices are determined according to the number of pipettes associated with the pipetting head group 54 and their interval. The pipetting head group 54, for introduction of the liquid into the sensor cells 17, accesses the liquid reservoirs 61 to suck liquid, and then moves to the immobilizing stage 51 for introduction to the sensor unit 12.

A pipette tip tray or rack 63 is placed on the casing base 50. Pipette tips 62 are stored in the pipette tip tray 63. The pipette tips 62 are fitted on ends of pipetting heads of the dispensing and removing pipettes 19a and 19b in a removable manner. As the pipette tips 62 come in direct contact with liquid, the pipette tips 62 are exchanged for respective types of liquids in use so as not to prevent mixture or contamination of the liquids. Each of the dispensing and removing pipettes 19a and 19b is composite pipette equipment, which has a mechanism for automatically picking up and releasing the pipette tips 62 so as to renew the pipette tips 62 without manual operation. If renewal of the pipette tips 62 is desired, at first the pipetting head group 54 releases a used one of the pipette tips 62 by use of an abandoning unit (not shown). Then the pipetting head group 54 accesses the pipette tip tray 63 to pick up unused ones of the pipette tips 62.

There is a well plate 64 having a plurality of wells arranged in a matrix form. The well plate 64 is used for storing liquid retrieved by the pipettes in a preliminary manner, and also for mixing a plurality of liquids to prepare liquid composition.

For the immobilization, the casing of the sample immobilizing device 10 is covered by a cover (not shown), which intercepts the inside of the sample immobilizing device with the immobilizing stage 51 from the outside. A temperature adjuster (not shown) keeps the temperature of the inside of the sample immobilizing device 10 adjustable. The sensor unit 12 remains set on the immobilizing stage 51 for a certain time after introduction of ligand on the sensor cells 17 and before completing the immobilization of the ligand 21a on the sensing surface 13a. In the course of preservation, the ligand fluid 21 is stirred or turbulently flowed in the flow channel 16 if required. The extent of immobilization depends upon temperature or other environmental conditions of the sensor unit 12. Thus, a temperature adjuster is used to keep the inside of the sample immobilizing device 10 at a predetermined temperature. The temperature and time for keeping the sample immobilizing device 10 are suitably determined according to a type of the ligand 21a.

When the immobilization is completed, liquid buffer is introduced as washing liquid. While the sensor cells 17 are filled with the ligand solution or ligand fluid as a fluid which contains ligand and fluid medium, the pipette 19a with the liquid buffer is inserted in the cross shaped slit 43b to introduce the liquid buffer to the sensor cells 17. When the liquid buffer is ejected from the entrance end opening 16a to flow into the flow channel 16, the ligand fluid having been filled in the flow channel 16 is pressurized toward the exit end opening 16b, and discharged from the flow channel 16. The pipette 19b is controlled for suction in synchronism with the pipette 19a in the dispensation. The pipette 19b retrieves the ligand fluid by suction at the same time as the supply of the liquid buffer. As a result, what is filled in the sensor cells 17 is changed over.

After completion of washing, evaporation retardant for the ligand 21a may be introduced to the sensor cells 17 in the same manner as above. The ligand 21a can be prevented from drying before the start of the measurement.

In Fig. 5, the assay apparatus 11 includes a holder moving mechanism 71, a pickup mechanism 72, a pipetting head moving assembly 73, and an assay stage or signal detecting stage 74. A casing 75 of the assay apparatus 11 accommodates those elements. The holder moving mechanism 71 includes a transporting belt 76, a carriage 77 and a pallet 78. The carriage 77 is secured on the transporting belt 76. The pallet 78 is secured to the carriage 77, and supports the sensor holder 52 containing the sensor unit 12 after the immobilization. The holder moving mechanism 71 shifts the pallet 78 in the direction X together with the sensor holder 52, to set each of the sensor units 12 to a pickup position for the pickup mechanism 72 to pick up.

The pickup mechanism 72 picks up the sensor unit 12 from the sensor holder 52, and includes the pressing shifter 81 and a handling head or chuck 82. The pressing shifter 81 presses up the sensor unit 12 contained in the sensor holder 52. The handling head 82, when the sensor unit 12 is pressed up by the pressing shifter 81, squeezes and holds the sensor unit 12. A middle of the sensor holder 52 has a holder opening. A middle of the support panel or pallet 78 has an opening associated with the holder opening. The pressing shifter 81 includes the shifting element 81a and a shifter driving mechanism 81b. The shifting element 81a moves from a lower side of the pallet 78 and upwards to come through the pallet 78, and contacts a lower surface of the sensor unit 12 by entry through the sensor holder 52 to push up the sensor unit 12. The shifter driving mechanism 81b drives the shifting element 81a to move up and down.

A head body or chuck body 82a is a base of the handling head 82. A ball screw 86 in a sensor moving mechanism extends beside the handling head 82. A nut 84 between the handling head 82 and the ball screw 86 keeps the handling head 82 movable in response to rotations of the ball screw 86. The handling head 82 is movable in the direction Y, to transfer the sensor unit 12 to the assay stage 74. After the assay, the handling head 82 moves back to the pickup position, and releases the sensor unit 12 being used to drop back to the sensor holder 52.

In the assay stage or signal detecting stage 74 are disposed the illuminator 32 and the photo detector 33 under a level where the sensor unit 12 is disposed. The sensor unit 12 includes a plurality of the sensor cells 17, for each of which biomaterial is assayed. The assay stage 74 moves the sensor unit 12 in the direction Y at an amount of the pitch of the sensor cells 17 arranged regularly, to shift each of the sensor cells 17 into a light path of the illuminator 32 suitably.

As has been referred to above, the illuminator 32 and the photo detector 33 are positioned so that a direction of light projected and reflected between those for the sensor unit 12 intersects horizontally with a flow of the flow channel 16, which is depicted in Fig. 5.

A well plate or liquid reservoirs 88 is placed beside the assay stage or signal detecting stage 74, for storing the analyte fluid 27. Plural types of the analyte fluid 27 different from one another are contained in the wells or liquid reservoirs 88. Note that the assay apparatus 11 includes a well plate (not shown), and a pipette tip tray or rack, both in positions easily accessed by the pipette couple 26. The well plate contains liquid buffer for assay, and washing liquid. The pipette tip tray or rack contains pipette tips for renewal.

A pipetting head group 87 with a liquid transfer mechanism is constituted by the pipette couple 26. The pipetting head moving assembly 73 shifts the pipetting head group 87 in three dimensions of directions X, Y and Z, and positions the pipetting head group 87 selectively at the sensor unit 12 and the liquid reservoirs 88. The pipetting head moving assembly 73 is structurally the same as the pipetting head moving assembly 56 in the sample immobilizing device 10. The pipetting head group 87 accesses the sensor unit 12 as a target to be measured, and introduces and removes liquids. The pipette couple 26 is only one pair of pipettes unlike the pipetting head group 54 in the sample immobilizing device 10, because only the particular one of the sensor cells 17 is accessed by the pipetting head group 87.

For an assay of the analyte, the pipetting head group 87 accesses the well plate 88 and sucks the analyte fluid 27 of a selected one of the plural specimens. Then the pipetting head group 87 moves to the assay stage or signal detecting stage 74, and introduces the analyte fluid 27 into one of the sensor cells 17 set in the assay position. The data reading of the optical assay unit 31 is started before the introduction of the analyte fluid 27, and continues until the discharge of the analyte fluid 27. An SPR output of the photo detector 33 is sent to the data analyzer 91 as measured data. The data analyzer 91 analyzes interaction between the analyte and ligand according to the measured data.

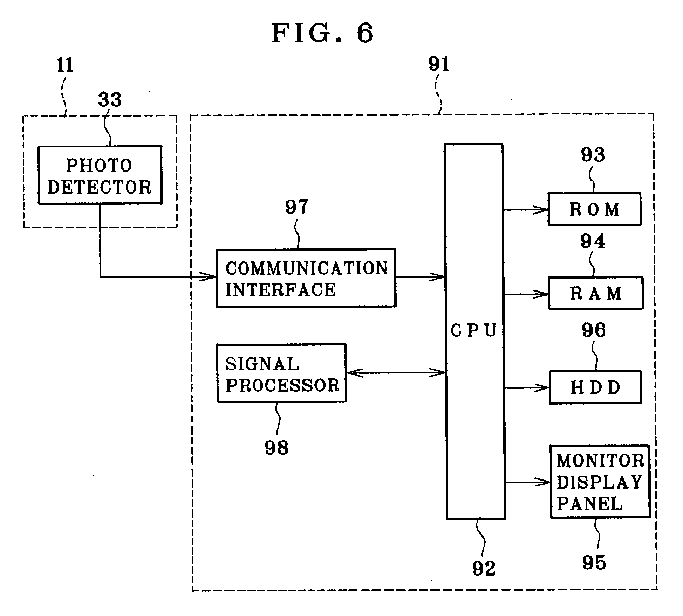

In Fig. 6, the data analyzer 91 includes a CPU 92, a ROM 93, a RAM 94, a monitor display panel 95, a hard disk (HDD) 96, a communication interface (I/F) 97 and a signal processor or arithmetic processor 98. The CPU 92 controls the various elements in the data analyzer 91. The ROM 93 stores control programs and various preset parameters. The RAM 94 is used as a work memory for arithmetic operation of the CPU 92 and the signal processor 98. The hard disk 96 is a data storage device well known in the art, and stores a number of programs including the control program, data analysis program and the like. Also, the hard disk 96 stores various measured data obtained by the assay apparatus 11. The communication interface 97 transmits the SPR signal output by the photo detector 33. The signal processor 98 is responsive to the SPR signal, and analyzes the data and evaluates the immobilized amount of the ligand. The monitor display panel 95 displays information of the SPR signal and assay results according to the evaluation. Note that various subsidiary programs according to U.S.P. No. 6,415,235 (corresponding to JP-A 10-232199) can be used in combination with the control program.

The evaluation of the immobilized ligand is quantitatively to evaluate an immobilized state of the ligand on the sensing surface 13a in the immobilization. The sensor unit 12 is set on the assay stage or signal detecting stage 74 in a similar manner to the assay of the interaction between the ligand and analyte. During the evaluation of the immobilization, no analyte is introduced. The sensor cell 17 is kept filled with buffer, while an SPR signal is detected. According to this, the immobilized amount is calculated by the data analyzer 91. To evaluate the immobilized ligand, an SPR signal of the sensing surface 13a before the immobilization is compared with an SPR signal of the sensing surface 13a after the immobilization. Between the steps before and after the immobilization, the refraction index changes on the sensing surface 13a. A resonance angle of creating the SPR also changes. This change is retrieved quantitatively to evaluate the immobilized ligand.

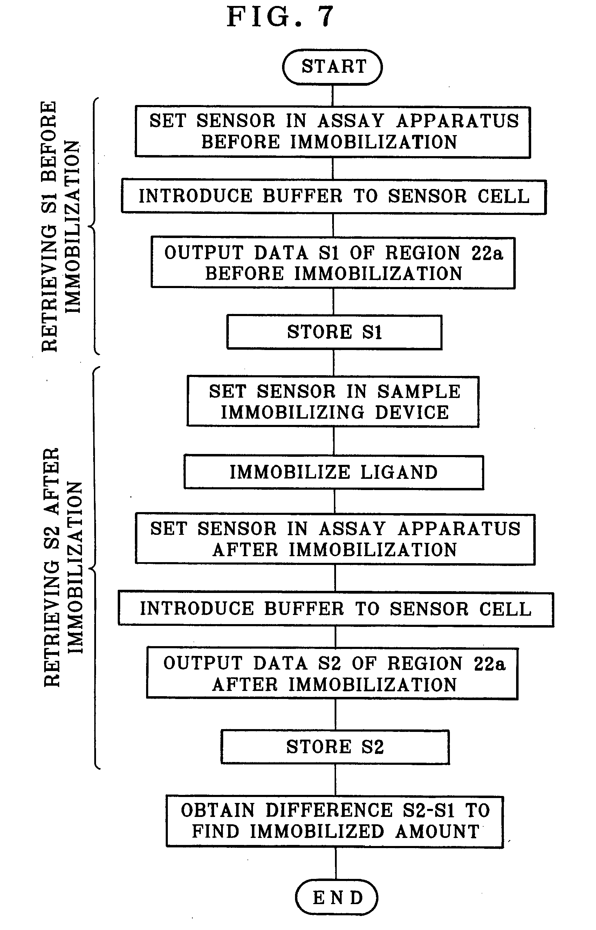

In Fig. 7, a flow of evaluating an amount of immobilized ligand is illustrated. At first, the sensor unit 12 before immobilization of the ligand is set on the assay stage or signal detecting stage 74. The pipette couple 26 introduces fluid buffer into the sensor cells 17 for assay. The optical assay unit 31 detects the act-signal S1 as an SPR output of the assay region 22a before the immobilization. The signal S1 is sent to the data analyzer 91 and written to the hard disk 96. After this, the sensor unit 12 is removed from the assay stage 74, and set in the sample immobilizing device 10 to immobilize the ligand. When the pipette couple 19 introduces the ligand fluid 21 into the sensor cells 17, the ligand fluid 21 is caused to flow to the sensing surface 13a, to immobilize the ligand fluid 21 on the sensing surface 13a. Before the completion of immobilization, the sensor unit 12 is preserved in an immobilizing state for a predetermined time.

After the immobilization, the sensor unit 12 is removed from the sample immobilizing device 10, and set again on the assay stage or signal detecting stage 74. In a manner similar to the state before the immobilization, buffer is introduced to the sensor cells 17. The sensor unit 12 is measured by the optical assay unit 31, to detect an act-signal S2 for the assay region 22a after the immobilization. The signal S2 after the immobilization is transmitted to the data analyzer 91 and written to the hard disk 96.

The signal processor or arithmetic processor 98 reads the SPR signal S2 after the immobilization and the SPR signal S1 before the immobilization from the hard disk 96, obtains a difference (S2-S1), to calculate an immobilized amount.

The disposition of the immobilizing stage is separate from the assay stage or signal detecting stage 74. There is no occupation of the assay stage 74 during the immobilization of the immobilizing stage. The assay operation can be free from delay because the assay stage 74 can be used for assay.

In the above embodiment, an amount of the immobilized ligand is evaluated only according to the act-signal associated with the assay region 22a. However, it is possible to evaluate an amount of the immobilized ligand by comparison of dual channel signals including the act-signal and ref-signal in a similar manner to measuring the interaction between the ligand and analyte. It follows that the amount of immobilization can be evaluated with remarkably high precision, because it is possible to cancel individual specificity of sensor cells, individual specificity of sensor units, differences in the density of the buffer between the sensor cells, and the like. Examples of individual specificity of sensor cells are differences in thickness of the metal film, position differences and angular differences of the sensor cells, and the like. Examples of individual specificity of sensor units include differences in the angle of the prism.

In the above embodiment, the signals are detected before and after the immobilization, to evaluate an immobilized amount according to a difference between those. However, an initial signal level as a basis can be predetermined and utilized as a reference level. Only the signal after the immobilization can be detected and evaluated for measurement in comparison with the initial signal level.

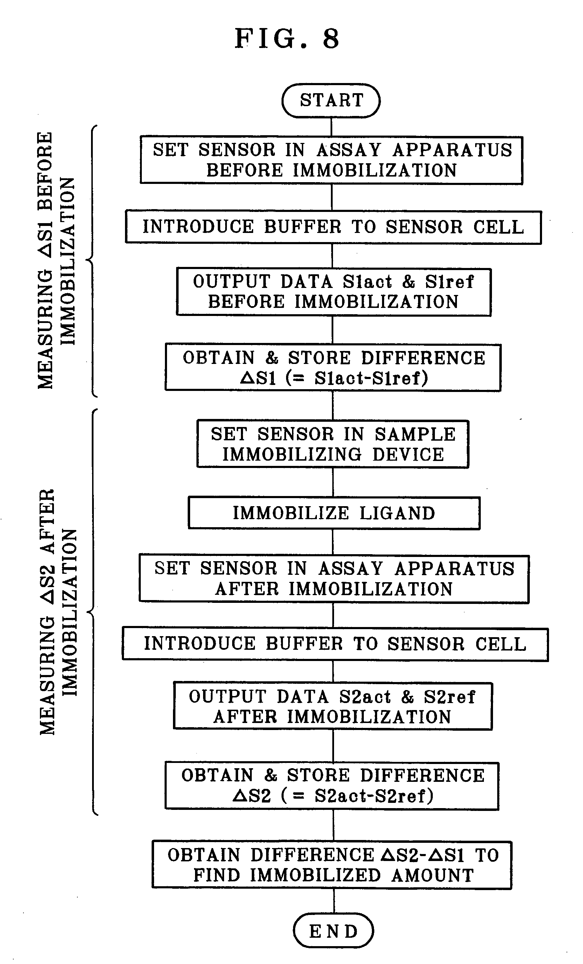

In Fig. 8, a flow of evaluating an immobilized amount according to dual channel signals is depicted. The sensor unit 12 before the immobilization is set in the assay stage or signal detecting stage 74, and supplied with buffer by introducing operation. After this, an SPR signal Slact of the assay region 22a and an SPR signal Slref of the reference region 22b are detected in relation to a designated one of the sensor cells 17. A difference ΔS1 (= Slact - Slref) between those signals are obtained, and written to the hard disk 96.

The sensor unit 12 is set in the sample immobilizing device 10 to immobilize the ligand thereon. After this, the sensor unit 12 is set on the assay apparatus 11. A designated one of the sensor cells 17 is supplied with buffer by introducing operation. After this, an SPR signal S2act of the assay region 22a and an SPR signal S2ref of the reference region 22b are detected. A difference ΔS2 (= S2act - S2ref) between those signals are obtained, and written to the hard disk 96. The signal processor or arithmetic processor 98 calculates a difference (ΔS2-ΔS1) between ΔS2 before the immobilization and ΔS1 before the immobilization, to determine an immobilized amount.

Owing to the dual channel detection of signals, it is possible to cancel individual specificity of sensor units or sensor cells, differences in the density of the buffer between the sensor cells, and the like. It is likely in the assay stage that the photo detector has differences between the signal channels in the disposition, angle and the like. Such differences may cause differences between the signal channels in light receiving positions of the light reflected by the thin film/dielectric interface even if the light of the signal channels are caused to come incident at the same incident angle. However, it is possible to cancel the position difference of the light receiving positions between the signal channels by subtracting ΔS1 before immobilization from ΔS2 after immobilization. See the flow of Fig. 8.

In the above embodiment, measurement of two times is required, namely before and after the immobilization. However, it is also possible to predetermine a position difference for the purpose of rapid evaluation, so as to correct the ΔS2 after the immobilization according to the difference. To this end, a reference prism for the inspection can be used. The measurement can be made only one time after the immobilization, so that the evaluation can be simplified.

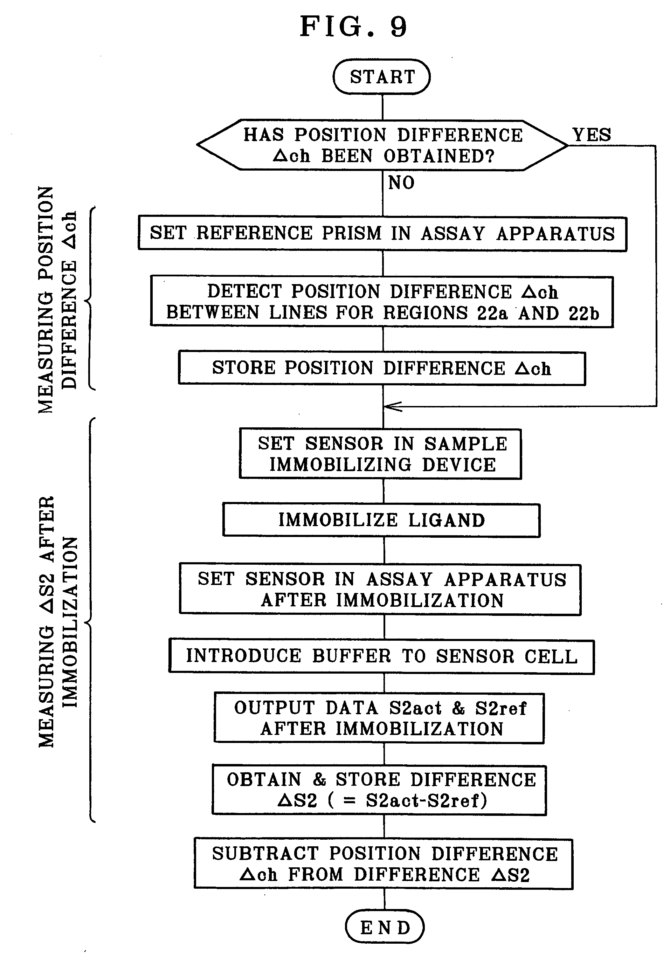

In Fig. 9, a flow for correcting the immobilized amount according to a position difference Δch is illustrated. If no position difference Δch has been obtained yet, then a position difference Δch is determined at first. To this end, a reference prism is set on the assay stage 74. A pin stripe is formed on the reference prism and positioned on a light entrance surface or light exit surface. The reference prism is positioned to set the pin stripe inside a light path. Light is applied to the reference prism, from which reflected light is detected by the photo detector 33. The pin stripe results in an absorption line (dark line) on the photo receptor surface. Positions of the absorption line for the respective signal channels are obtained. A difference between those positions is determined as a position difference Δch. This position difference Δch is written to the hard disk 96. Then ΔS2 after the immobilization is measured to obtain the immobilized amount. Note that, if the position difference Δch has been already obtained, ΔS2 after the immobilization starts being measured. The signal processor or arithmetic processor 98 subtracts the position difference Δch from ΔS2 after the immobilization, for compensation.

The position difference Δch is measured at any suitable step, for example upon shipment of the assay apparatus 11 being manufactured, or in the maintenance of the assay apparatus 11, and is written to the hard disk 96 or other data storage devices. If next evaluation of the immobilized ligand is made, the position difference Δch is read from the hard disk 96 without newly determining a position difference Δch, for the purpose of the compensation. The position difference Δch is determined again in next maintenance. The position difference Δch in the hard disk 96 is renewed by overwriting of the new value.

In the above embodiment, the reference prism having the pin stripe is used to obtain a position difference Δch. However, the reference prism may not be used. Instead, the sensor unit 12 for the normal use can be used to obtain a position difference Δch. In the sensor unit 12, liquid having a uniform refraction index is introduced into the flow channel 16, for example, pure water. Light is applied by the illuminator 32 to the thin film/dielectric interface 13b, where the reflected light is received by the photo detector 33. Surface plasmon resonance occurs at a resonance angle according to the refraction index of the pure water. Light, which is reflected by the reflection angle or resonance angle and comes incident on the photo receptor surface, is determined as an absorption line (dark line) on the photo receptor surface. A position difference Δch can be calculated according to the absorption line. Note that any suitable methods other than this can be used for obtaining a position difference Δch if an absorption line can be created on the photo receptor surface of the photo detector 33.

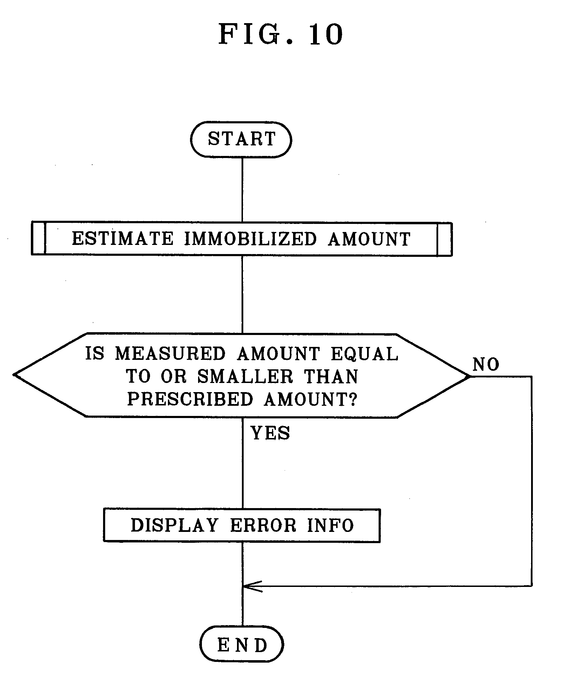

In Fig. 10, additional generation of an alarm signal is illustrated. After the immobilized amount is evaluated, the CPU 92 checks whether the evaluated amount is equal to or less than a prescribed value. If it is, then the monitor display panel 95 is driven to indicate an alarm signal, for example an error message.

In the above embodiment, the assay stage for assaying interaction between the ligand and analyte is used as signal detecting stage for evaluating an amount of the immobilized sample. However, a signal detecting stage may be separate from the assay stage in a specialized manner for evaluating the immobilized amount. Although the casing for the immobilizing stage is separate from the casing for the signal detecting stage according to the above embodiment, a single casing can be used for installing both the immobilizing stage and the signal detecting stage.

In the above embodiment, the sensor unit includes the three sensor cells. However, the number of the sensor cells can be two, or four or more. Furthermore, sensor cells can be arranged in a matrix form, namely two or more arrays.

In the above embodiment, the sensor unit is a composite structure including the metal film, flow channel and prism. However, no prism may be included in a sensor unit. Instead, a prism can be included in a main unit of the assay apparatus. Furthermore, a sensor unit according to the invention may be different from that including the metal film and flow channel, for example, can be a chip type having a sensor chip.

In addition to the SPR sensor, an assay sensor according to the invention can be other sensor in utilizing attenuated total reflection. One example of sensor according to utilizing the attenuated total reflection is a leaky mode sensor. The leaky mode sensor includes a dielectric medium, a cladding layer overlaid on the dielectric medium, and an optical waveguide layer overlaid on the cladding layer, those layers constituting a thin film. A first surface of the thin film is a sensing surface on the optical waveguide layer. A second surface of the thin film is a thin film/dielectric interface on the cladding layer. When light becomes incident on the thin film/dielectric interface to satisfy the condition of the total reflection, part of the light passes through the cladding layer, and enters the optical waveguide layer. A guided mode to propagate light is excited responsively in the optical waveguide layer, to attenuate the reflected light on the thin film/dielectric interface. An angle of the incidence at which the guided mode is excited is changeable according to the refraction index of the medium positioned on the sensing surface. This is similar to the characteristic of the resonance angle of the SPR sensor. The attenuation of the reflected light is detected, so that it possible to measure the interaction on the sensing surface.

Also, the evaluation of immobilized biomaterial according to the invention can be used for various systems of biochemical assays other than the surface plasmon resonance (SPR) system, for example, enzyme labeled immunosorbent assays. An example of labeling with enzymes is suggested in U.S.P. No. 6,040,196 (corresponding to JP-A 9-145713).

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. An immobilized sample measuring device comprising:
an immobilizing stage (10) for immobilization of a sample (21a) on a sensing surface (13a) of at least one sensor unit (12), wherein said sensor unit includes a transparent dielectric medium (14), and a thin film (13), having a first surface (13b) and said sensing surface back to said first surface, said first surface being connected with said dielectric medium for constituting a thin film/dielectric interface (13b), said sensing surface being adapted to sensing reaction of said sample immobilized thereon;
a signal detecting stage (31, 74), loaded with said sensor unit after said sample immobilization in said immobilizing stage, having a photo detector (33) for receiving illuminating light reflected by said thin film/dielectric interface upon applying said illuminating light to said thin film/dielectric interface in a form conditioned for total reflection, to detect attenuation of said illuminating light and output a detection signal (S2) thereof; and
an arithmetic processor (91, 98) for quantitatively evaluating an amount of said sample immobilized on said sensing surface according to said detection signal.

2. A measuring device as defined in claim 1, wherein said sample comprises ligand, and said sensing surface assays interaction between analyte and said ligand.

3. A measuring device as defined in claim 2, wherein before said sample immobilization, said sensor unit is set on said signal detecting stage for said photo detector to output an initial detection signal;
wherein said arithmetic processor evaluates said immobilized amount according to comparison between said initial detection signal and said detection signal.

4. A measuring device as defined in claim 1, wherein said sensing surface includes an assay region for immobilizing reaction of said sample, and a reference region inactive with respect to immobilizing said sample;
wherein said photo detector outputs said detection signal upon photo reception from said thin film/dielectric interface in said assay region, and outputs a reference signal upon photo reception from said thin film/dielectric interface in said reference region;
said arithmetic processor evaluates said immobilized amount according to said detection signal and said reference signal.

5. A measuring device as defined in claim 4, wherein said photo detector obtains a position difference between a first light receiving position where said illuminating light is received on a photo detection surface upon reflection from said assay region at said thin film/dielectric interface, and a second light receiving position where said illuminating light is received on said photo detection surface upon reflection from said reference region at said thin film/dielectric interface;
said arithmetic processor corrects said immobilized amount according to said position difference.

6. A measuring device as defined in claim 1, wherein said at least one sensor unit comprises plural sensor units;
further comprising a sensor holder for containing said plural sensor units, said sensor holder being adapted to transfer of said plural sensor units between said immobilizing stage and said signal detecting stage.

7. A measuring device as defined in claim 1, wherein said sensing surface includes an assay region for immobilizing reaction of said sample, and a reference region inactive with respect to immobilizing said sample;
before said sample immobilization, said sensor unit is set on said signal detecting stage, and said photo detector outputs an initial detection signal upon photo reception from said thin film/dielectric interface in said assay region, and outputs an initial reference signal upon photo reception from said thin film/dielectric interface in said reference region;
after said sample immobilization, said photo detector outputs said detection signal upon photo reception from said thin film/dielectric interface in said assay region, and outputs a reference signal upon photo reception from said thin film/dielectric interface in said reference region;
said arithmetic processor evaluates said immobilized amount according to said initial detection signal, said initial reference signal, said detection signal and said reference signal.

8. A measuring device as defined in claim 1, further comprising an alarm unit, driven if said evaluated immobilized amount is equal to or less than a prescribed level, for generating an alarm signal.

9. A measuring device as defined in claim 1, comprising:
a first casing having said immobilizing stage; and
a second casing having said signal detecting stage.

10. A measuring device as defined in claim 1, comprising one casing having said immobilizing stage and said signal detecting stage.

11. A measuring device as defined in claim 1, wherein said sensor unit includes a flow channel block, provided with said dielectric medium secured thereto, and having a flow channel, disposed to receive said sensing surface, to cause said sample to flow to said sensing surface.

12. A measuring device as defined in claim 11,
wherein said sensor unit includes plural sensor cells each of which is constituted by said sensing surface and said flow channel.

13. A measuring device as defined in claim 1, wherein said thin film comprises a metal film, and generates surface plasmon resonance on said sensing surface upon incidence of said illuminating light.

14. An immobilized sample measuring method comprising:
an immobilizing step of immobilizing a sample on a sensing surface of at least one sensor unit, wherein said sensor unit includes a transparent dielectric medium, and a thin film, having a first surface and said sensing surface back to said first surface, said first surface being connected with said dielectric medium for constituting a thin film/dielectric interface, said sensing surface being adapted to sensing reaction of said sample immobilized thereon;
a signal detecting step of receiving illuminating light reflected by said thin film/dielectric interface with a photo detector upon applying said illuminating light to said thin film/dielectric interface in a form conditioned for total reflection, to detect attenuation of said illuminating light and output a detection signal thereof; and
an arithmetic processing step of quantitatively evaluating an amount of said sample immobilized on said sensing surface according to said detection signal.

15. A measuring method as defined in claim 14,
wherein in said immobilizing step, said sensor unit is set on an immobilizing stage, and in said signal detecting step, said sensor unit with said sample immobilized is set on a signal detecting stage that is different from said immobilizing stage.

16. A measuring method as defined in claim 15,
wherein before said immobilizing step, said sensor unit is set on said signal detecting stage for said photo detector to output an initial detection signal;
in said arithmetic processing step, said immobilized amount is evaluated according to comparison between said initial detection signal and said detection signal.

17. A measuring method as defined in claim 15,
wherein said sensing surface includes an assay region for immobilizing reaction of said sample, and a reference region inactive with respect to immobilizing said sample;
wherein said photo detector outputs said detection signal upon photo reception from said thin film/dielectric interface in said assay region, and outputs a reference signal upon photo reception from said thin film/dielectric interface in said reference region;
in said arithmetic processing step, said immobilized amount is evaluated according to said detection signal and said reference signal.

18. A measuring method as defined in claim 17, further comprising steps of:
obtaining a position difference between a first light receiving position where said illuminating light is received on said photo detector upon reflection from said assay region at said thin film/dielectric interface, and a second light receiving position where said illuminating light is received on said photo detector upon reflection from said reference region at said thin film/dielectric interface;
correcting said immobilized amount according to said position difference.

19. A measuring method as defined in claim 15,
wherein said at least one sensor unit comprises plural sensor units;
wherein a sensor holder is used for containing said plural sensor units, to transfer said plural sensor units between said immobilizing stage and said signal detecting stage.

20. A measuring method as defined in claim 15,
wherein said sensing surface includes an assay region for immobilizing reaction of said sample, and a reference region inactive with respect to immobilizing said sample;
before said immobilizing step, setting said sensor unit on said signal detecting stage, wherein said photo detector outputs an initial detection signal upon photo reception from said thin film/dielectric interface in said assay region, and outputs an initial reference signal upon photo reception from said thin film/dielectric interface in said reference region;
wherein after said immobilizing step, said photo detector outputs said detection signal upon photo reception from said thin film/dielectric interface in said assay region, and outputs a reference signal upon photo reception from said thin film/dielectric interface in said reference region;
in said arithmetic processing step, said immobilized amount is evaluated according to said initial detection signal, said initial reference signal, said detection signal and said reference signal.

21. A measuring method as defined in claim 12,
wherein said sensor unit includes a flow channel block, provided with said dielectric medium secured thereto, and having a flow channel, disposed to receive said sensing surface, to cause said sample to flow to said sensing surface.

22. A measuring method as defined in claim 21,
wherein said sensor unit includes plural sensor cells each of which is constituted by said sensing surface and said flow channel.

23. A measuring method as defined in claim 12,
wherein said thin film comprises a metal film, and generates surface plasmon resonance on said sensing surface upon incidence of said illuminating light.
